# EUROPEAN PATENT SPECIFICATION

(11) **EP 1 889 488 B1**
(45) Date of publication and mention of the grant of the patent: **31.10.2012**
(21) Application number: 06765672.8
(22) Date of filing: 08.05.2006
(51) Int. Cl.: H04N 7/56, H04N 5/60, H04N 5/067

(54) **AUDIO-VIDEO PROCESSING SYSTEM**
AUDIO-VIDEO-VERARBEITUNGSSYSTEM
SYSTEME DE TRAITEMENT AUDIO-VIDEO

(30) Priority: 24.05.2005 EP 05104377
(43) Date of publication of application: 20.02.2008
(73) Proprietor: Trident Microsystems (Far East) Ltd., Grand Cayman (KY)
(72) Inventor: VANDERHEIJDEN, Gerardus, W., T., NL-5656 AA Eindhoven (NL); KATS, Romke, NL-5656 AA Eindhoven (NL); SNIJDERS, Richard, A., M., J., NL-5656 AA Eindhoven (NL)
(74) Representative: Epping - Hermann - Fischer
(86) International application number: PCT/IB2006/051433
(87) International publication number: WO 2006/126113

(56) References cited:
- EP-A- 1 139 665
- EP-A1- 1 439 712
- EP-A1- 1 439 712
- US-A- 4 703 355
- US-A- 5 623 483
- US-A- 5 751 368

## Description

The invention relates to equipment for use in an audio-video processing system.

US 5,202,761 discloses an audio synchronizer apparatus having a delay detector for accurately measuring the delay of a video apparatus, coupled with a controllable, variable delay audio delay circuit for accurately delaying an audio frequency signal by substantially the same amount as the video signal delay. A typical connection to the audio synchronizer is shown where an alternate delay input from an external video processing device is input through an optional interface.

US 4,703,355 describes an audio to video timing equalizer method and apparatus, in which audio timing signals are encoded on a video signal prior to transmission.

US 5,623,483 describes a synchronization system for networked multimedia streams.

EP 1 439 712 A1 describes a method of selecting among "Spatial Video CODEC's" the optimum CODEC for the same input signal.

It is, inter alia, an object of the invention to provide improved equipment for use in an audio-video processing system.

The invention is defined in the accompanying claims.

One aspect of the invention is based on the insight that the prior art fails to provide a solution applicable if the audio part of the AV system is not able to match all possible delays in the video part of the AV system, and/or if content is coming from a game console so that video processing delays exceeding a certain maximum delay are simply unacceptable because they would spoil the game. With these concerns in mind, the invention provides a video delay control for controlling the video signal processing in dependence on a maximum allowed value for the video signal processing delay. Based on this maximum allowable delay, the video signal processing can be limited to modes that do not entail video processing delays exceeding the maximum allowable delay.

The invention thus provides a processing system, comprising a video signal processing unit for processing a video signal, the video signal processing entailing a video signal processing delay, and video delay control for controlling said video signal processing unit in dependence on a maximum allowed value for the video signal processing delay. The invention also provides a corresponding video signal processing method.

These and other aspects of the invention will be apparent from and elucidated with reference to the embodiments described hereinafter.

In the drawings:

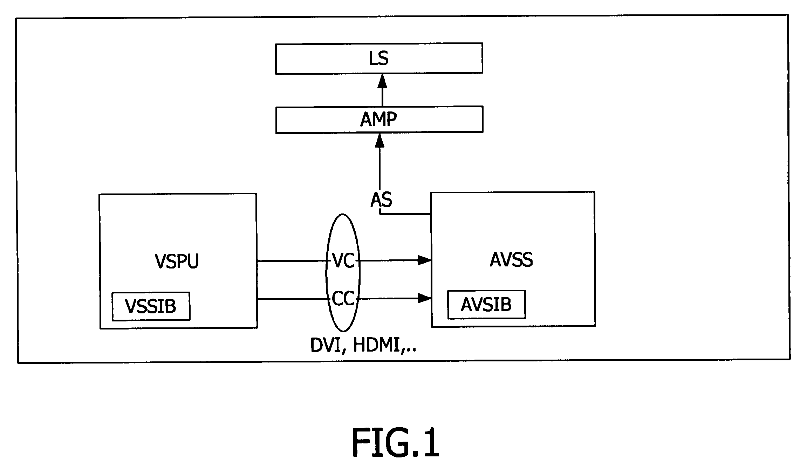

Fig. 1 shows an embodiment of a system in accordance with the present invention;
Fig. 2 shows an embodiment of a video processing unit in accordance with the present invention; and
Fig. 3 shows an embodiment of an audio-video signal source in accordance with the present invention.

An embodiment of a system operation in accordance with the present invention is as follows. An audio video signal source AVSS, for example a content system, will decode and/or generates audio and video. This can be a DVD player, a home-cinema set, but also a Set-Top box or a game console. So, the content may originate from a DVD, a network, or be locally generated. The user will hear the audio signal AS via the loudspeakers LS with an optional amplifier AMP in-between. This amplifier is optional, because a home-cinema system may have a direct connection to the loudspeakers.

The video signal is going directly to a video signal processing unit VSPU formed by a TV-set or monitor via an analog or digital interface. In addition to the video channel VC there can be a communication channel CC, for instance CEC, DDC as in DVI and HDMI or an AV-link as in some analog TV systems. The video signal processing unit VSPU will process the video signal, and associated to that it may introduce delay in the presentation of the video on the display. This delay is dependent on the processing in the video signal processing unit VSPU (e.g. a TV system), which may be dependent on the video content (film, video, interlaced, progressive, etc.), but also on the user preference (who can force the processing in a specified mode/preferences). The information about the delay that is associated with a certain mode/user preference, is stored in the capabilities / status information block VSSIB, which could be accessible via the communication channel from the content system. That information can be used to change the audio processing delay in the content system.

The following operations may exist:

### Forced content system mode:

The audio video signal source AVSS could read the capabilities from the video signal processing unit VSPU indicating the delays in certain modes when it starts to output content on the video signal. If the audio video signal source AVSS is a game console, it could force the video signal processing unit VSPU (by writing to a control location) into the lowest delay mode (needed for games). If the audio video signal source AVSS is a DVD player or a set-top box (STB), it could force the video signal processing unit VSPU into a mode that yields the best quality result on the display, or in a mode that depends on a maximum audio delay that the audio video signal source AVSS (STB/DVD) can compensate.

### Adaptive mode:

The video signal processing unit VSPU receives the video content and will dynamically change the processing mode (dependent on content and user settings), as such it will update the capabilities / status information in the memory AVSIB which is accessible from the audio video signal source AVSS. Optionally, video signal processing unit VSPU may generate an interrupt to the audio video signal source AVSS (using the communication channel) to indicate the change. The audio video signal source AVSS can periodically sense the status register or optionally respond to the interrupt and change the audio delay according the status and closest to the associated delay. In case the video signal processing unit VSPU is not the last unit in a processing chain (if there are additional systems behind it with the same interface), the video signal processing unit VSPU will need to add its delay to the delay of the other devices, or the content system has to read all delays in the chain and add them.

### Forced TV system mode:

It is also possible that the video signal processing unit VSPU reads the capabilities from the audio video signal source AVSS (on delay possibilities) and will force the audio video signal source AVSS to additionally delay the audio dependent of its own video processing delay.

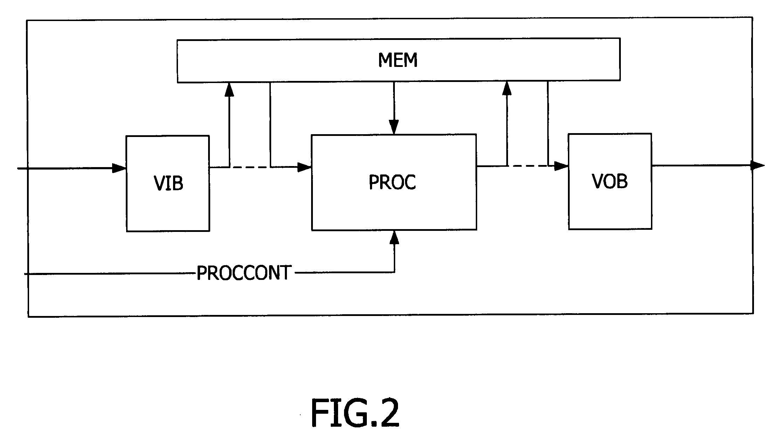

Fig. 2 shows an embodiment of a video processing unit in accordance with the present invention. An input video signal is applied to a video input buffer VIB. An output of the video input buffer VIB is connected to a memory MEM for processing and additional delay, and to a processing unit PROC for e.g. de-interlacing and scaling. The processing unit PROC is controlled by a processing control signal PROCCONT. Outputs of the memory MEM and the processing unit PROC are connected to a video output buffer VOB. In this embodiment, the following processing modes are available:

| **Processing Mode** | **Delay** | **Video Quality** |
|---|---|---|
| line copy (de-interlace) | 2 lines (128 µs) | --- |
| 2 fields | 1 field (20 ms) | 0 |
| 3 fields | 2 fields (40 ms) | + |
| 4 fields | 3 fields (60 ms) | ++ |
| motion-compensated | 2.5 fields (50 ms) | ++ |
| motion-compensated (high quality) | 3.5 fields (70 ms) | +++ |

Clearly, the examples in the above table depend on the video standard; the indicated times relate to the PAL standard. Depending on an amount of free memory, additional delay is possible in all modes.

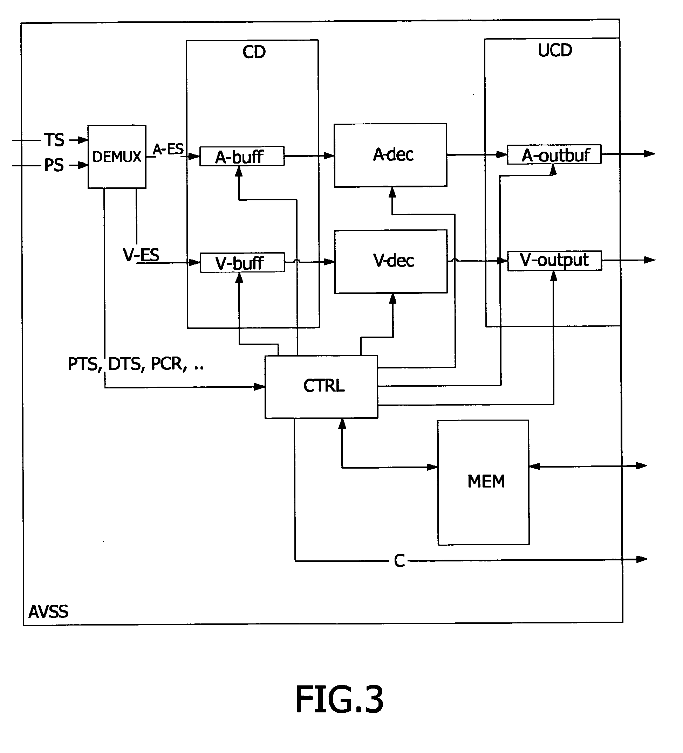

Fig. 3 shows an embodiment of an audio-video signal source AVSS in accordance with the present invention. Herein,
TS = Transport stream input (for a set top box)
PS = Program stream input (for a DVD or a set top box)
ES = elementary stream (only video or audio information)
PTS = Presentation Time Stamp (indicates when the picture or audio samples have to be presented on screen or speakers)
DTS = decoding time stamp (indicates when do you need to decode the images/sound, used for reordering)
PCR = program clock recovery (is used to synchronize the receiver clock to the encoder clock).

The signals TS and PS are applied to a demultiplexer DEMUX for generating an audio elementary stream A-ES, a video elementary stream V-ES, and signals PTS, DTS and PCR. In a compressed domain CD, there is an audio buffer A-buff receiving the audio elementary stream A-ES, and a video buffer V-buff receiving the video elementary stream V-ES. The audio and video buffers A-buff and V-buff are controlled by a PLL/sync processing and delay control unit CTRL that receives the signals PTS, DTS and PCR. Signals from the audio and video buffers A-buff and V-buff are respectively applied to an audio decoder A-dec and a video decoder V-dec, controlled by the PLL/sync processing and delay control unit CTRL. Signals from the audio and video decoders A-dec and V-dec are respectively applied to an audio output buffer A-outbuf and a video output buffer V-outbuf in an uncompressed domain UCD. The audio and video output buffers A-outbuf and V-outbuf are also controlled by the PLL/sync processing and delay control unit CTRL.

It is possible to delay the video and audio in the compression domain CD (after de-multiplexing), such that big buffers are not necessary. In case the PTS etc. are known, the clock control CTRL can delay depending on the requested output delay. The control CTRL also controls the decoder (using the decoding timestamps), and also the output (using the presentation time stamp), and it can be possible that at the output the buffers A-outbuf and V-outbuf are used to delay also the video and audio signals before presenting them to the display unit. The control unit CTRL is also used to communicate with the display unit on the settings, and a capabilities control memory MEM can be used by the display unit to read out the capabilities of the player. The control unit CTRL may also have a connection C for reading TV capabilities and write control.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. The mere fact that certain measures are recited in mutually different dependent claims does not indicate that a combination of these measures cannot be used to advantage.

## Claims

1. A processing system, comprising:
an audio video signal source (AVSS) for decoding and/or generating an audio signal and a video signal;
a video signal processing unit (VSPU), formed by a TV-Set or a monitor connected to the audio-video signal source by means of an analog or digital interface, for processing the video signal in accordance with a plurality of video processing modes, wherein the processing of the video signal comprises de-interlacing and scaling and each video processing mode has a respective associated video signal processing delay; and
video delay control means for controlling said video signal processing unit by limiting the video signal processing unit to video processing modes having associated video signal processing delays that do not exceed a maximum allowed value.

2. A processing system as claimed in claim 1, further comprising an audio signal processing unit for processing an audio signal, said audio signal processing entailing an audio signal processing delay, wherein said maximum allowed value for said video signal processing delay depends on a maximum value of said audio signal processing delay.

3. A processing system as claimed in claim 1, wherein the audio video signal source (AVSS) is applying the video signal and said maximum allowed value for said video signal processing delay to the video signal processing unit.

4. A processing system as claimed in claim 1, wherein the analog or digital interface comprises:
a video channel (VC) for sending the video signal to the video signal processing unit; and
a communication channel (CC) for communicating to the video signal processing unit said maximum allowed value.

5. A processing system as claimed in claim 1, wherein the information about the video signal processing delay that is associated with a certain video processing mode is stored in a capabilities/status information block (VSSIB).

6. A processing system as claimed in claim 1, wherein the audio video signal source (AVSS) comprises a control unit (CTRL) adapted to communicate with the video signal processing unit (VSPU) on the settings by means of a capabilities control memory (MEM), wherein the video signal processing unit (VSPU) is adapted to read out the capabilities of the audio video signal source (AVSS) from the capabilities control memory.

7. A processing system as claimed in claim 6, wherein the control unit (CTRL) has a connection (C) and is further adapted for reading the capabilities and write control of the video signal processing unit (VSPU) by means of the connection (C).

8. A video signal processing method for a processing system comprising an audio video signal source (AVSS) for decoding and/or generating an audio signal and a video signal; and a video signal processing unit (VSPU), formed by a TV-Set or a monitor connected to the audio-video signal source by means of an analog or digital interface, the method comprising:
processing, by the video signal processing unit (VSPU), a video signal in accordance with one of a plurality of video processing modes, wherein the processing of the video signal comprises de-interlacing and scaling, and wherein each mode has a respective associated video signal processing delay; and
limiting, by the video signal processing unit (VSPU) or the audio video signal source (AVSS), said video signal processing to modes having associating video processing delays that do not exceed a maximum allowed value.

9. A video signal processing method in accordance with claim 8, further comprising:
reading, by the audio video signal source (AVSS), the capabilities from the video signal processing unit (VSPU) indicating the delays in certain modes when the audio video signal source (AVSS) starts to output content on the video signal;
if the audio video signal source (AVSS) is a game console, forcing, by the audio video signal source (AVSS), the video signal processing unit (VSPU) into the lowest delay mode by writing to a control location; and
if the audio video signal source (AVSS) is a DVD player or a set-top box, forcing, by the audio video signal source (AVSS), the video signal processing unit (VSPU) into a mode that yields the best quality result on the display or in a mode that depends on a maximum audio delay that the audio video signal source AVSS can compensate.

10. A video signal processing method in accordance with claim 8, further comprising:
receiving, by a video signal processing unit (VSPU), video content;
dynamically changing, by the video signal processing unit (VSPU), the processing mode dependent on the video content and/or user settings;
updating, by the video signal processing unit (VSPU), status information in a status register which is accessible from an audio video signal source (AVSS); and
periodically sensing, by the audio video signal source AVSS, the status information of the status register; and
changing, by the audio video signal source (AVSS), the audio delay according to a value closest to the video signal processing delay associated with the status information of the status register.

11. A video signal processing method in accordance with claim 8, further comprising:
reading, by the video signal processing unit (VSPU), capabilities on delay possibilities from an audio video signal source (AVSS); and
forcing, by the video signal processing unit (VSPU), the audio video signal source AVSS to delay an audio signal dependent of the video processing delay entailed by the video signal processing unit (VSPU).

## Patentansprüche

1. Verarbeitungssystem, umfassend:
eine Audio-/Videosignalquelle (AVSS) zum Decodieren und/oder Generieren eines Audiosignals und eines Videosignals;
eine Videosignal-Verarbeitungseinheit (VSPU), die durch ein Fernsehgerät oder einen Bildschirm gebildet ist, das bzw. der mittels einer analogen oder digitalen Schnittstelle an die Audio-/Videosignalquelle angeschlossen ist, um das Videosignal entsprechend einer Mehrzahl von Videoverarbeitungs-Betriebsarten zu verarbeiten, wobei das Verarbeiten des Videosignals ein Entflechten und Skalieren umfasst und jede Videoverarbeitungs-Betriebsart eine jeweilige zugehörige Videosignal-Verarbeitungsverzögerung aufweist; und
eine Videoverzögerungs-Steuereinrichtung zum Steuern der Videosignal-Verarbeitungseinheit, indem die Videosignal-Verarbeitungseinheit auf Videoverarbeitungs-Betriebsarten mit zugehörigen Videosignal-Verarbeitungsverzögerungen beschränkt wird, die einen maximal zulässigen Wert nicht überschreiten.

2. Verarbeitungssystem nach Anspruch 1, darüber hinaus eine Audiosignal-Verarbeitungseinheit zum Verarbeiten eines Audiosignals umfassend, wobei die Audiosignalverarbeitung eine Audiosignal-Verarbeitungsverzögerung mit sich bringt, wobei der maximal zulässige Wert für die Videosignal-Verarbeitungsverzögerung von einem Maximalwert der Audiosignal-Verarbeitungsverzögerung abhängt.

3. Verarbeitungssystem nach Anspruch 1, wobei die Audio-/Videosignalquelle (AVSS) die Videosignal-Verarbeitungseinheit mit dem Videosignal und dem maximal zulässigen Wert für die Videosignal-Verarbeitungsverzögerung beaufschlagt.

4. Verarbeitungssystem nach Anspruch 1, wobei die analoge oder digitale Schnittstelle umfasst:
einen Videokanal (VC) zum Senden des Videosignals an die Videosignal-Verarbeitungseinheit; und
einen Kommunikationskanal (CC), um der Videosignal-Verarbeitungseinheit den maximal zulässigen Wert mitzuteilen.

5. Verarbeitungssystem nach Anspruch 1, wobei die Information über die Videosignal-Verarbeitungsverzögerung, die mit einer bestimmten Videoverarbeitungs-Betriebsart einhergeht, in einem Leistungsfähigkeits-/Statusinformationsblock (VSSIB) gespeichert ist.

6. Verarbeitungssystem nach Anspruch 1, wobei die Audio-/Videosignalquelle (AVSS) eine Steuereinheit (CTRL) umfasst, die dazu angepasst ist, mit der Videosignal-Verarbeitungseinheit (VSPU) mittels eines Leistungsfähigkeitssteuerspeichers (MEM) Daten über die Einstellungen auszutauschen, wobei die Videosignal-Verarbeitungseinheit (VSPU) dazu angepasst ist, die Leistungsfähigkeit der Audio-/Videosignalquelle (AVSS) aus dem Leistungsfähigkeitssteuerspeicher auszulesen.

7. Verarbeitungssystem nach Anspruch 6, wobei die Steuereinheit (CTRL) einen Anschluss (C) hat und darüber hinaus dazu angepasst ist, die Leistungsfähigkeit und Schreibsteuerung der Videosignal-Verarbeitungseinheit (VSPU) über den Anschluss (C) auszulesen.

8. Videosignal-Verarbeitungsverfahren für ein Verarbeitungssystem, das eine Audio-/Videosignalquelle (AVSS) zum Decodieren und/oder Generieren eines Audiosignals und eines Videosignals; und eine Videosignal-Verarbeitungseinheit (VSPU) umfasst, die durch ein Fernsehgerät oder einen Bildschirm gebildet ist, das bzw. der mittels einer analogen oder digitalen Schnittstelle an die Audio-/Videosignalquelle angeschlossen ist, wobei das Verfahren umfasst:
Verarbeiten, durch die Videosignal-Verarbeitungseinheit (VSPU), eines Videosignals gemäß einer aus einer Mehrzahl von Videoverarbeitungs-Betriebsarten, wobei die Verarbeitung des Videosignals ein Entflechten und Skalieren umfasst und jede Betriebsart eine jeweilige zugehörige Videosignal-Verarbeitungsverzögerung aufweist; und
Beschränken der Videosignalverarbeitung, durch die Videosignal-Verarbeitungseinheit (VSPU) oder Audio-/Videosignalquelle (AVSS), auf Betriebsarten mit zugehörigen Videoverarbeitungsverzögerungen, die einen maximal zulässigen Wert nicht überschreiten.

9. Videosignal-Verarbeitungsverfahren nach Anspruch 8, darüber hinaus umfassend:
Auslesen, durch die Audio-/Videosignalquelle (AVSS), der Leistungsfähigkeit aus der Videosignal-Verarbeitungseinheit (VSPU), was die Verzögerungen in bestimmten Betriebsarten anzeigt, wenn die Audio-/Videosignalquelle (AVSS) damit beginnt, Inhalte über das Videosignal auszugeben;
wenn es sich bei der Audio-/Videosignalquelle (AVSS) um eine Spielekonsole handelt, Erzwingen, durch die Audio-/Videosignalquelle (AVSS), dass die Videosignal-Verarbeitungseinheit (VSPU) zur Betriebsart mit der geringsten Verzögerung übergeht, indem an einem Steuerort ein Schreibvermerk erfolgt; und
wenn es sich bei der Audio-/Videosignalquelle (AVSS) um einen DVD-Player oder eine Set-Top-Box handelt, Erzwingen, durch die Audio-/Videosignalquelle (AVSS), dass die Videosignal-Verarbeitungseinheit (VSPU) in eine Betriebsart, die das qualitativ beste Ergebnis auf der Anzeige ergibt, oder in eine Betriebart übergeht, die von einer maximalen Audioverzögerung abhängt, die die Audio-/Videosignalquelle (AVSS) ausgleichen kann.

10. Videosignal-Verarbeitungsverfahren nach Anspruch 8, darüber hinaus umfassend:
Empfangen von Videoinhalten durch eine Videosignal-Verarbeitungseinheit (VSPU);
dynamisches Verändern der Verarbeitungsbetriebsart durch die Videosignal-Verarbeitungseinheit (VSPU) abhängig von den Videoinhalten und/oder Benutzereinstellungen;
Aktualisieren, durch die Videosignal-Verarbeitungseinheit (VSPU), von Statusinformationen in einem Statusregister, das für eine Audio-/Videosignalquelle (AVSS) zugänglich ist; und
periodisches Erfassen der Statusinformationen des Statusregisters durch die Audio-/Videosignalquelle (AVSS); und
Verändern, durch die Audio-/Videosignalquelle (AVSS), der Audioverzögerung entsprechend einem Wert, der der Videosignal-Verarbeitungsverzögerung am nächsten kommt, die den Statusinformationen des Statusregisters zugeordnet ist.

11. Videosignal-Verarbeitungsverfahren nach Anspruch 8, darüber hinaus umfassend:
Auslesen, durch die Videosignal-Verarbeitungseinheit (VSPU), der Leistungsfähigkeit bezüglich Verzögerungsmöglichkeiten aus einer Audio-/Videosignalquelle (AVSS); und
Erzwingen, durch die Videosignal-Verarbeitungseinheit (VSPU), dass die Audio-/Videosignalquelle (AVSS) abhängig von der durch die Videosignal-Verarbeitungseinheit (VSPU) eingebrachten Videoverarbeitungsverzögerung ein Audiosignal verzögert.

## Revendications

1. Système de traitement, comprenant :
une source de signal audio vidéo (AVSS) destinée à décoder et/ou générer un signal audio et un signal vidéo ;
une unité de traitement de signal vidéo (VSPU), formée par un poste de télévision ou un écran raccordé à la source de signal audio vidéo au moyen d'une interface analogique ou numérique, destinée à traiter le signal vidéo en fonction d'une pluralité de modes de traitement vidéo, où le traitement du signal vidéo comprend le désentrelacement et la mise à l'échelle et chaque mode de traitement vidéo a un retard de traitement de signal vidéo associé respectif ; et
des moyens de commande de retard vidéo destinés à commander ladite unité de traitement de signal vidéo en limitant l'unité de traitement de signal vidéo à des modes de traitement vidéo ayant des retards de traitement de signal vidéo associés qui ne dépassent pas une valeur maximale autorisée.

2. Système de traitement tel que revendiqué dans la revendication 1, comprenant en outre une unité de traitement de signal audio destinée à traiter un signal audio, ledit traitement de signal audio entraînant un retard de traitement de signal audio, où ladite valeur maximale autorisée pour ledit retard de traitement de signal vidéo dépend d'une valeur maximale dudit retard de traitement de signal audio.

3. Système de traitement tel que revendiqué dans la revendication 1, où la source de signal audio vidéo (AVSS) applique le signal vidéo et ladite valeur maximale autorisée pour ledit retard de traitement de signal vidéo à l'unité de traitement de signal vidéo.

4. Système de traitement tel que revendiqué dans la revendication 1, où l'interface analogique ou numérique comprend :
un canal vidéo (VC) destiné à envoyer le signal vidéo à l'unité de traitement de signal vidéo ; et
un canal de communication (CC) destiné à communiquer à l'unité de traitement de signal vidéo ladite valeur maximale autorisée.

5. Système de traitement tel que revendiqué dans la revendication 1, où l'information relative au retard de traitement de signal vidéo qui est associé à un certain mode de traitement vidéo est stockée dans un bloc d'informations de capacités / d'état (VSSIB).

6. Système de traitement tel que revendiqué dans la revendication 1, où la source de signal audio vidéo (AVSS) comprend une unité de commande (CTRL) apte à communiquer avec l'unité de traitement de signal vidéo (VSPU) concernant les paramètres au moyen d'une mémoire de commande de capacités (MEM), où l'unité de traitement de signal vidéo (VSPU) est apte à lire les capacités de la source de signal audio vidéo (AVSS) à partir de la mémoire de commande de capacités.

7. Système de traitement tel que revendiqué dans la revendication 6, où l'unité de commande (CTRL) a une connexion (C) et est en outre apte à lire les capacités et à écrire une commande de l'unité de traitement de signal vidéo (VSPU) au moyen de la connexion (C).

8. Procédé de traitement de signal vidéo pour un système de traitement comprenant une source de signal audio vidéo (AVSS) destinée à décoder et/ou générer un signal audio et un signal vidéo ; et une unité de traitement de signal vidéo (VSPU), formée par un poste de télévision ou un écran raccordé à la source de signal audio vidéo au moyen d'une interface analogique ou numérique, le procédé comprenant :
le traitement, par l'unité de traitement de signal vidéo (VSPU), d'un signal vidéo en fonction de l'un d'une pluralité de modes de traitement vidéo, où le traitement du signal vidéo comprend le désentrelacement et la mise à l'échelle, et où chaque mode a un retard de traitement de signal vidéo associé respectif ; et
la limitation, par l'unité de traitement de signal vidéo (VSPU) ou la source de signal audio vidéo (AVSS), dudit traitement de signal vidéo à des modes ayant des retards de traitement vidéo correspondants qui ne dépassent pas une valeur maximale autorisée.

9. Procédé de traitement de signal vidéo selon la revendication 8, comprenant en outre :
la lecture, par la source de signal audio vidéo (AVSS), des capacités à partir de l'unité de traitement de signal vidéo (VSPU) indiquant les retards dans certains modes lorsque la source de signal audio vidéo (AVSS) commence à sortir du contenu sur le signal vidéo ;
si la source de signal audio vidéo (AVSS) est une console de jeu, le forçage, par la source de signal audio vidéo (AVSS), de l'unité de traitement de signal vidéo (VSPU) dans le mode de retard le plus bas par écriture dans un emplacement de commande ; et
si la source de signal audio vidéo (AVSS) est un lecteur DVD ou un boîtier décodeur, le forçage, par la source de signal audio vidéo (AVSS), de l'unité de traitement de signal vidéo (VSPU) dans un mode qui fournit le meilleur résultat qualitatif sur l'affichage ou dans un mode qui dépend d'un retard audio maximal pouvant être compensé par la source de signal audio vidéo (AVSS).

10. Procédé de traitement de signal vidéo selon la revendication 8, comprenant en outre :
la réception, par une unité de traitement de signal vidéo (VSPU), de contenu vidéo ;
le changement dynamique, par l'unité de traitement de signal vidéo (VSPU), du mode de traitement en fonction du contenu vidéo et/ou des paramètres d'utilisateur ;
la mise à jour, par l'unité de traitement de signal vidéo (VSPU), d'une information d'état dans un registre d'état qui est accessible à partir d'une source de signal audio vidéo (AVSS) ; et
la détection périodique, par la source de signal audio vidéo (AVSS), de l'information d'état du registre d'état ; et
le changement, par la source de signal audio vidéo (AVSS), du retard audio selon une valeur qui soit la plus proche du retard de traitement de signal vidéo associé à l'information d'état du registre d'état.

11. Procédé de traitement de signal vidéo selon la revendication 8, comprenant en outre :
la lecture, par l'unité de traitement de signal vidéo (VSPU), de capacités sur des possibilités de retard à partir d'une source de signal audio vidéo (AVSS) ; et
le forçage, par l'unité de traitement de signal vidéo (VSPU), de la source de signal audio vidéo (AVSS) pour retarder un signal audio en fonction du retard de traitement vidéo entraîné par l'unité de traitement de signal vidéo (VSPU).
